# FASCICULE DE BREVET EUROPEEN

(11) **EP 2 466 353 B1**
(45) Date de publication et mention de la délivrance du brevet: **16.10.2019**
(21) Numéro de dépôt: 11190442.1
(22) Date de dépôt: 24.11.2011
(51) Int. Cl.: G02B 6/44

(54) **Boitier de raccordement de fibres optiques**
Anschlusskasten für Glasfaserkabel
Box for connecting optical fibres

(30) Priorité: 15.12.2010 FR 1060552
(43) Date de publication de la demande: 20.06.2012
(73) Titulaire: Nexans, 92400 Courbevoie (FR)
(72) Inventeur: Apere, Rodolphe, 78570 ANDRESY (FR); Renard, Xavier, 78410 AUBERGENVILLE (FR)
(74) Mandataire: Petit, Maxime

(56) Documents cités:
- WO-A1-2010/022798
- WO-A2-2009/158346

## Description

La présente invention a pour objet un boîtier de raccordement de fibres optiques. Elle concerne en particulier un boîtier permettant de raccorder des fibres optiques d'un utilisateur à des fibres optiques issues d'un câble d'acheminement de fibres optiques.

Chez un utilisateur, un tel boîtier de raccordement de fibres optiques peut être fixé directement sur un mur, par exemple par vissage, ou bien sur un rail, par exemple par clipsage. L'usage du boîtier ne pouvant pas être prédéterminé lors de la vente, un même boîtier doit être capable de se monter indifféremment sur un mur ou sur un rail.

Comme le boîtier se trouve installé chez l'utilisateur, en zone privée, l'esthétique est importante. C'est pourquoi les emplacements prévus dans le boîtier pour laisser passer le rail sont sécables, et cassés à la demande. Un tel boîtier munis d'emplacements sécables est par exemple décrit dans le document WO 2010/022798.

Ainsi, quand le boîtier n'est pas installé sur le rail, par exemple lorsqu'il est fixé au mur, aucun trou n'est apparent, ce qui, outre l'aspect esthétique, empêche la poussière de pénétrer dans le boîtier.

Un problème peut survenir lorsque l'on coupe les zones sécables du boîtier. En effet, en cassant les zones sécables, par exemple à la main ou à l'aide d'une pince, il se peut qu'une portion du boîtier qui devait être coupée reste présente après la découpe. Une telle portion, appelée bavure, va gêner l'assise du rail qui risque de mal se clipper et de se déclipper plus tard.

Il est connu d'enlever la bavure, au moyen d'un cutter par exemple, mais cette solution n'est pas satisfaisante car l'utilisation d'un cutter est dangereuse. Cette solution est en outre inesthétique et implique une opération supplémentaire.

La présente invention vise à remédier à ces inconvénients.

Elle propose en particulier un boîtier de raccordement de fibres optiques permettant une fixation efficace et sécurisée du boîtier sur un rail.

L'invention a ainsi pour objet un boîtier de raccordement de fibres optiques, destiné à être fixé à un rail de fixation, le boîtier comprenant des zones sécables disposées sur au moins une bordure latérale du boîtier et permettant de positionner le rail sur au moins une surface de réception de rail lorsque les zones sécables sont coupées.

Conformément à l'invention, chaque surface de réception est située à un niveau différent du fond des zones sécables.

Le positionnement de chaque surface de réception à un niveau différent du fond des zones sécables permet de ne pas gêner l'assise du rail, même s'il reste des bavures dans le fond des zones sécables. En effet, ce n'est pas le fond des zones sécables qui assure la réception du rail (comme c'est le cas dans le document WO 2010/022798), mais les surfaces de réception.

Chaque surface de réception peut être disposée à un niveau situé au-dessus du fond des zones sécables, et notamment à un niveau situé entre le fond des zones sécables et la surface supérieure des zones sécable.

Le boîtier peut comprendre au moins quatre zones sécables, dont deux premières zones sécables situées sur une première bordure latérale et deux secondes zones sécables situées sur une deuxième bordure latérale du boîtier.

Le boîtier peut comprendre une surface de réception de rail associée à chaque zone sécable.

Chaque zone sécable peut être de forme rectangulaire.

Chaque surface de réception de rail peut être la surface supérieure d'une ou plusieurs nervures.

Chaque surface de réception de rail peut être la surface supérieure de deux nervures.

L'invention a également pour objet un dispositif de raccordement de fibres optiques. Le dispositif selon l'invention comprend un rail de fixation et un boîtier décrit ci-dessus.

D'autres caractéristiques et avantages de l'invention apparaîtront plus clairement à la lecture de la description suivante donnée à titre d'exemple illustratif et non limitatif et faite en référence aux dessins annexés sur lesquels :
- les figures 1 et 2 sont des vues en perspective d'un boîtier selon l'invention,
- la figure 3 est une vue en perspective du boîtier monté sur un rail, et
- les figures 4 et 5 sont des vues de côté du boîtier, avec et sans rail.

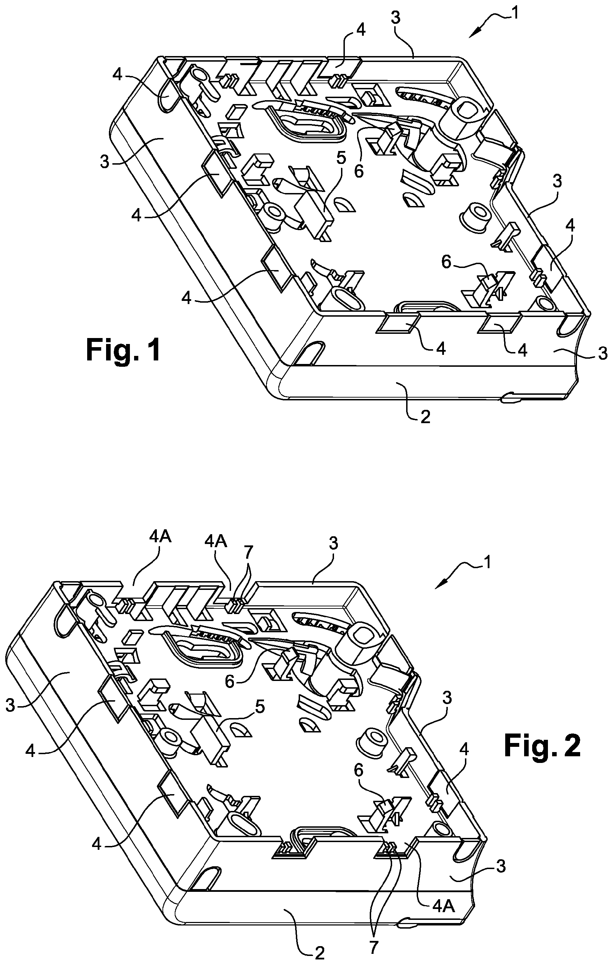

Le boîtier 1 de raccordement de fibres optiques, tel qu'illustré à la figure 1, comprend une face arrière destinée à la fixation du boîtier 1 chez un utilisateur et une face avant pouvant par exemple accueillir une ou plusieurs cassettes de lovage de fibres et de maintien d'épissures. La face avant est recouverte d'un capot 2. Le boîtier 1 est généralement en matière plastique.

Le boîtier 1 est sensiblement plan et comprend quatre bordures latérales 3 qui se font face deux par deux. Les bordures 3 sont munies de zones sécables 4. Les zones sécables 4 peuvent être de forme parallélépipédique et être disposées au sommet des bordures latérales 3.

Pour fixer le boîtier 1 sur un rail de fixation, on procède dans une première étape au découpage de zones sécables 4, ce qui conduit au boîtier 1 illustré à la figure 2. On peut ainsi découper deux zones sécables 4 sur deux bordures 3 opposées, chaque zone sécable 4 accueillant une bordure du rail de fixation. La découpe des zones sécables 4 conduit à la formation d'évidements rectangulaires 4A délimités par un fond entouré de deux bordures latérales.

Des éléments de guidage 5 du rail et de clipsage 6 du rail permettent d'assurer la fixation du boîtier 1 sur le rail.

Le boîtier 1 comprend en outre des zones de réception du rail pouvant être constituées par la surface supérieure de deux plats ou nervures 7, chaque zone de réception étant en saillie de la face arrière du boîtier 1. L'utilisation de deux nervures 7 permet de mouler plus facilement le boîtier 1. On peut toutefois utiliser tout type de surface d'appui pour réceptionner le rail.

Le plan des zones de réception est ainsi un plan proximal de la surface supérieure des zones sécable 4, tandis que le plan du fond des zones sécables est un plan distal de la surface supérieure des zones sécables 4. Le plan des zones de réception est situé entre les deux surfaces externes des zones sécables qui sont parallèles au plan du boîtier 1.

Ainsi, le positionnement des zones de réception au-dessus du fond des zones sécables 4 permet de ne pas gêner l'assise du rail, même s'il reste des bavures dans le fond des zones sécables 4A. On sépare ainsi la partie sécable 4 de l'assise du rail.

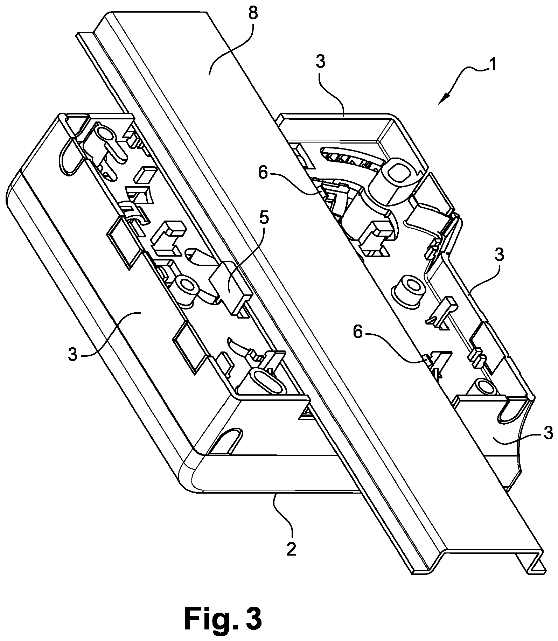

On positionne ensuite un rail 8 sur les zones de réception. Les éléments de clipsage 6 complètent la fixation du rail 8 sur le boîtier 1 (figure 3).

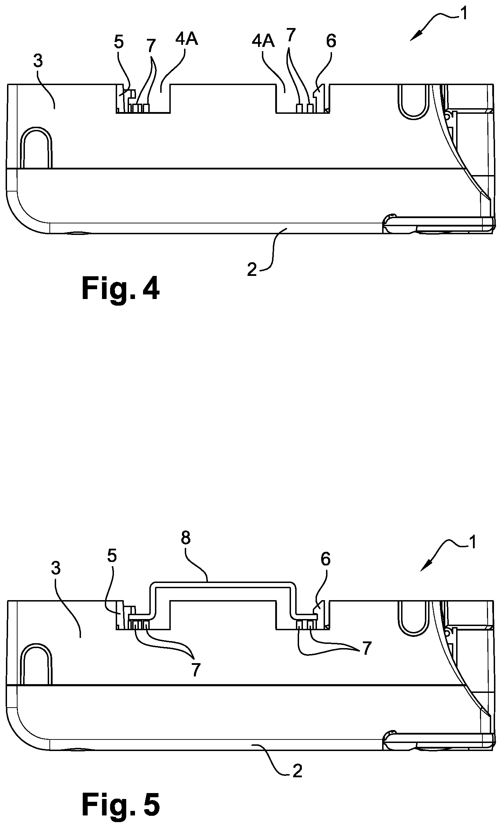

Les figures 4 et 5 sont des vues de face d'une bordure latérale 3. Le fond des évidements 4A est situé sous le plan de la surface de réception du rail 8.

## Revendications

1. Boîtier (1) de raccordement de fibres optiques, destiné à être fixé à un rail de fixation (8), le boîtier (1) comprenant des zones sécables (4) disposées sur au moins une bordure latérale (3) du boîtier (1), lesdites zones sécables (4) permettant, lorsqu'elles sont coupées, de positionner le rail (8) sur au moins une surface de réception de rail, ledit boitier de raccordement étant **caractérisé en ce que** chaque surface de réception est située dans un plan situé entre les deux surfaces externes des zones sécables (4) qui sont parallèles au plan du boîtier (1).

2. Boîtier (1) selon la revendication 1, **caractérisé en ce qu'**il comprend au moins quatre zones sécables (4), dont deux premières zones sécables (4) situées sur une première bordure latérale (3) et deux secondes zones sécables (4) situées sur une deuxième bordure latérale (3) du boîtier (1) située en face de la première bordure latérale (3).

3. Boîtier (1) selon l'une des revendications 1 ou 2, **caractérisé en ce qu'**une surface de réception de rail est associée à chacune des zones sécables (4).

4. Boîtier (1) selon l'une des revendications 1 à 3, **caractérisé en ce que** chaque zone sécable (4) est de forme rectangulaire.

5. Boîtier (1) selon l'une des revendications 1 à 4, **caractérisé en ce que** chaque surface de réception de rail est la surface supérieure d'une ou plusieurs nervures (7).

6. Boîtier (1) selon la revendication 5, **caractérisé en ce que** chaque surface de réception de rail est la surface supérieure de deux nervures (7).

7. Dispositif de raccordement de fibres optiques, **caractérisé en ce qu'**il comprend un rail de fixation (8) et un boîtier (1) selon l'une des revendications 1 à 6.

## Patentansprüche

1. Anschlusskasten (1) für Glasfaserkabel, der dazu bestimmt ist, an einer Befestigungsschiene (8) befestigt zu sein, wobei der Kasten (1) teilbare Zonen (4) umfasst, die auf mindestens einem Seitenrand (3) des Kastens (1) angeordnet sind, wobei die teilbaren Zonen (4) gestatten, wenn sie geschnitten sind, die Schiene (8) auf mindestens einer Schienenaufnahmefläche zu positionieren, wobei der Anschlusskasten **dadurch gekennzeichnet ist, dass** sich jede Aufnahmefläche in einer Ebene befindet, die sich zwischen den zwei Außenflächen der teilbaren Zonen (4) befinden, die zur Ebene des Kastens (1) parallel sind.

2. Kasten (1) nach Anspruch 1, **dadurch gekennzeichnet, dass** er mindestens vier teilbare Zonen (4) umfasst, wovon sich zwei erste teilbare Zonen (4) auf einem ersten Seitenrand (3) befinden und sich zwei zweite teilbare Zonen (4) auf einem zweiten Seitenrand (3) des Kastens (1) befinden, der sich gegenüber dem ersten Seitenrand (3) befindet.

3. Kasten (1) nach einem der Ansprüche 1 oder 2, **dadurch gekennzeichnet, dass** jeder der teilbaren Zonen (4) eine Schienenaufnahmefläche zugeordnet ist.

4. Kasten (1) nach einem der Ansprüche 1 bis 3, **dadurch gekennzeichnet, dass** jede teilbare Zone (4) rechteckig ist.

5. Kasten (1) nach einem der Ansprüche 1 bis 4, **dadurch gekennzeichnet, dass** jede Schienenaufnahmefläche die obere Fläche von einer oder mehreren Rippen (7) ist.

6. Kasten (1) nach Anspruch 5, **dadurch gekennzeichnet, dass** jede Schienenaufnahmefläche die obere Fläche von zwei Rippen (7) ist.

7. Anschlussvorrichtung für Glasfaserkabel, **dadurch gekennzeichnet, dass** sie eine Befestigungsschiene (8) und einen Kasten (1) nach einem der Ansprüche 1 bis 6 umfasst.

## Claims

1. A box (1) for connecting optical fibers, intended to be fastened to a fastening rail (8), the box (1) comprising frangible zones (4) arranged on at least one side border (3) of the box (1), said frangible zones (4) making it possible, when they are cut, to position the rail (8) on at least one rail receiving surface, said connecting box being **characterized in that** each receiving surface is located in a plane located between the two outer surfaces of the frangible zones (4) that are parallel to the plane of the housing (1).

2. The housing (1) according to claim 1, **characterized in that** it comprises at least four frangible zones (4), including two first frangible zones (4) located on a first lateral border (3) and two second frangible zones (4) located on a second lateral border (3) of the housing (1) located across from the first lateral border (3).

3. The housing (1) according to one of claims 1 or 2, **characterized in that** a rail receiving surface is associated with each of the frangible zones (4).

4. The housing (1) according to one of claims 1 to 3, **characterized in that** each frangible zone (4) has a rectangular shape.

5. The housing (1) according to one of claims 1 to 4, **characterized in that** each rail receiving surface is the upper surface of one or several ribs (7).

6. The housing (1) according to claim 5, **characterized in that** each rail receiving surface is the upper surface of two ribs (7).

7. A device for connecting optical fibers, **characterized in that** it comprises a fastening rail (8) and a housing (1) according to one of claims 1 to 6.
